(19) Europäisches Patentamt
European Patent Office
Office européen des brevets

(11) **EP 4 403 518 A1**

(12) **EUROPEAN PATENT APPLICATION**
published in accordance with Art. 153(4) EPC

(43) Date of publication:
**24.07.2024 Bulletin 2024/30**

(21) Application number: **22870312.0**

(22) Date of filing: **15.09.2022**

(51) International Patent Classification (IPC):
*C01B 33/113* [(2006.01)]

(52) Cooperative Patent Classification (CPC):
**C01B 33/113;** Y02E 60/10

(86) International application number:
**PCT/KR2022/013794**

(87) International publication number:
**WO 2023/043228 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2021 KR 20210122903**

(71) Applicant: POSCO Silicon Solution Co., Ltd
**Sejong-si 30011 (KR)**

(72) Inventors:
• LEE, Jaewoo
**Sejong 30152 (KR)**
• PARK, Jingee
**Daegu 42287 (KR)**
• CHOI, Sunho
**Daejeon 34396 (KR)**
• CHEON, Junghoon
**Sejong 30153 (KR)**

(74) Representative: **Maiwald GmbH**
**Elisenhof**
**Elisenstraße 3**
**80335 München (DE)**

(54) **SILICON-BASED MOLDED BODY AND METHOD FOR CONTINUOUSLY PREPARING SILICON OXIDE BY USING SAME**

(57) The present invention relates to a silicon-based molded body capable of improving the production efficiency of silicon oxide by inducing a solid-liquid reaction with liquefied silicon. The silicon-based molded body according to the present invention comprises: a first powder containing silicon; a second powder containing silicon oxide; and a third powder containing at least one metal selected from the group consisting of alkali metals, alkali earth metals, transition metals, and post-transition metals, at least two species of powders among the first to third powders being different in average diameter (D50) from each other, and the silicon-based molded body is formed by compressively molding a mixture of the first to third powders.

FIG. 1

INTRODUCE SILICON-BASED MOLDED BODY INTO MOLTEN SILICON TO INDUCT SOLID-LIQUID REACTION — a)

CONDENSE AND PRECIPITATE GASEOUS SILICON OXIDE GENERATED BY SOLID-LIQUID REACTION — b)

**Description**

Technical Field

The present disclosure relates to a silicon-based molded body and a method for continuously preparing silicon oxide using the same, and more particularly, to a silicon-based molded body that may improve production efficiency of silicon oxide by inducing a solid-liquid reaction with liquid silicon and a method for continuously preparing silicon oxide using the same.

Background Art

Demand for power storage devices, ranging from small electronic devices, such as mobile (IT) devices, to medium-to-large devices, such as electric vehicles (EVs) and energy storage systems (ESS), has rapidly increased.
Thereamong, technological development and demand for lithium secondary batteries have rapidly increased, and lithium secondary batteries with higher energy density than before have been required.
Therefore, in order to increase energy density, research and development is underway to increase the capacity of cathode and anode materials, increase the density of electrode plates, make separators thinner, and increase charge/discharge voltage. Recently, research and development have been focused on increasing the capacity of cathode and anode materials.
In particular, the development of silicon-based materials, which are the most promising materials for high capacity among the anode materials that determine the capacity of lithium secondary batteries, is actively underway.
However, a crystal structure of silicon-based materials changes as lithium ions are inserted during charging, and the volume expands about four times as much as before lithium is inserted. Therefore, silicon-based materials cannot withstand volume changes as they are repeatedly charged and discharged, causing cracks inside the crystals, destroying particles, and deteriorating electrical connections between adjacent particles, resulting in deterioration of lifespan characteristics. To improve these shortcomings, research has been conducted to improve lifespan characteristics and alleviate volume expansion using silicon oxide (SiOx).
In the related art silicon oxide manufacturing method, silicon oxide was manufactured in the form of nano powder particle using a dry or wet manufacturing process. Among them, the dry process used a method of reacting a trace amount of oxygen with metallic silicon or heating and evaporating silicon raw material powder particle and depositing it on a surface of a substrate to prepare silicon oxide. However, the dry process has the disadvantage of increased manufacturing costs and a long manufacturing time, and in particular, quality of the prepared silicon oxide is not uniform.
Meanwhile, in the related art method of doping silicon oxide with a metal element, silicon oxide and a metal additive were each volatilized and mixed to prepare metal-doped silicon oxide. However, due to a difference in volatilization temperature between the silicon oxide and the metal additive, uniform doping is difficult due to a change in specific surface area due to pressure and temperature difference and exhaustion of the metal additive, resulting in non-uniformity in the doped metal content.

Summary of Invention

Technical Problem

An aspect of the present disclosure is to provide a silicon-based molded body capable of improving production efficiency of silicon oxide including metal through a solid-liquid reaction induced with liquid silicon.
Another aspect of the present disclosure is to provide a silicon-based molded body capable of improving composition uniformity of silicon oxide including metal as well as improving the production efficiency described above.
Another aspect of the present disclosure is to provide a method for continuously preparing silicon oxide, capable of continuously preparing silicon oxide including metal with excellent production efficiency using the silicon-based molded body described above.

Solution to Problem

According to an aspect of the present disclosure, a silicon-based molded body includes: a first powder particle including silicon; a second powder particle including silicon dioxide; and a third powder particle including one or more metals selected from the group consisting of alkali metal, alkaline earth metal, transition metal, and post-transition metal, wherein average particle diameters (D50) of at least two types of powder particles among the first to third powder particles are different from each other and the silicon-based molded body is formed by press-molding a mixture of the first to third powder particles.

In the silicon-based molded body according to an embodiment of the present disclosure, the silicon-based molded body may satisfy the Relational expression 1 below:

$$(\text{Relational expression 1})$$

$$(A_{D50} + B_{D50})/(C_{D9} - C_{D10}) \le 5$$

In Relational expression 1, $A_{D5}$ is an average particle diameter of powder particle A having a largest average particle diameter among two or more types of powder particles having different average particle diameters, $B_{D50}$ is an average particle diameter of powder particle B having a smallest average particle diameter, $C_{D90}$ is a particle diameter (D90) corresponding to 90% of a volume accumulation from a side with a smaller particle diameter in mixed powder particles C including the powder particle A and the powder particle B, and $C_{D10}$ is a particle diameter (D10) corresponding to 10% of a volume accumulation of the mixed powder particles C.
In the silicon-based molded body according to an embodiment of the present disclosure, a porosity of the silicon-based molded body defined by a percentage for a ratio of a difference ($T_d - S_d$) between a true density $T_d$ and a molding density $S_d$ to the true density may be 5 to 65%.
In the silicon-based molded body according to an embodiment of the present disclosure, a molar ratio of silicon : silicon dioxide included in the silicon-based molded body may be 1:0.25 to 4.
In the silicon-based molded body according to an embodiment of the present disclosure, the third powder particle is a powder particle of a complex oxide including the metal and silicon.
In the silicon-based molded body according to an embodiment of the present disclosure, a strength of the silicon-based molded body may be 1.5 to 6 N/mm$^2$.
In the silicon-based molded body according to an embodiment of the present disclosure, the silicon-based molded body may be for preparing silicon oxide.
In the silicon-based molded body according to an embodiment of the present disclosure, the silicon-based molded body may be for preparing silicon oxide that reacts with liquid silicon.
Another aspect of the present disclosure provides a silicon-based molded body kit for preparing silicon oxide, including the silicon-based molded body described above and including two or more silicon-based molded bodies having different molar ratios of silicon: silicon dioxide.
Another aspect of the present disclosure provides a method for continuously preparing silicon oxide.
The method for continuously preparing silicon oxide includes: a) continuously introducing a silicon-based molded body to a molten silicon to induce a solid-liquid reaction; and b) condensing and precipitating a gaseous silicon oxide produced by the solid-liquid reaction, wherein the silicon-based molded body includes: a first powder particle including silicon; a second powder particle including silicon dioxide; and a third powder particle including one or more metals selected from the group consisting of alkali metal, alkaline earth metal, transition metal, and post-transition metal, wherein average particle diameters (D50) of at least two types of powder particles among the first to third powder particles are different from each other and the silicon-based molded body is formed by press-molding a mixture of the first to third powder particles.
In the method for continuously preparing silicon oxide according to an embodiment of the present disclosure, the silicon-based molded body may satisfy Condition 1 below:
Condition 1: a silicon-based molded boy satisfying Relational expression 1 below:

$$(\text{Relational expression 1})$$

$$(A_{D50} + B_{D5})/(C_{D90} - C_{D10}) \le 5$$

(In Relational expression 1, $A_{D50}$ is an average particle diameter of powder particle A having a largest average particle diameter among two or more types of powder particles having different average particle diameters, $B_{D5}$ is an average particle diameter of powder particle B having a smallest average particle diameter, $C_{D9}$ is a particle diameter (D90) corresponding to 90% of a volume accumulation from a side with a smaller particle diameter in mixed powder particles C including the powder particle A and the powder particle B, and $C_{D10}$ is a particle diameter (D10) corresponding to 10% of a volume accumulation of the mixed powder particles C).
In the method for continuously preparing silicon oxide according to an embodiment of the present disclosure, the silicon-based molded body may further satisfy one or more of conditions 2 to 4 below:

Condition 2: the silicon-based molded body has a porosity of 5 to 65% defined by a percentage for a ratio of a difference($T_d - S_d$) between a true density $T_d$ and a molding density $S_d$ to the true density.
Condition 3: the silicon-based molded body has a strength of 1.5 to 6 N/mm$^2$
Condition 4: the silicon-based molded body has 1:0.25 to 4 as a molar ratio of silicon:silicon dioxide.

In the method for continuously preparing silicon oxide according to an embodiment of the present disclosure, the silicon-based molded body in step a) may be calcined at 120 to 900°C.

In the method for continuously preparing silicon oxide according to an embodiment of the present disclosure, an impurity residual rate of the calcined silicon-based molded body may be 20% or less.

In the method for continuously preparing silicon oxide according to an embodiment of the present disclosure, the silicon-based molded body may be a silicon-based molded body kit including two or more silicon-based molded bodies having different molar ratios of silicon:silicon dioxide.

In the method for continuously preparing silicon oxide according to an embodiment of the present disclosure, each silicon-based molded body included in the silicon-based molded body kit in step a) is independently introduced into the molten silicon,

the silicon-based molded body first introduced into the molten silicon may have a molar ratio of silicon:silicon dioxide substantially satisfying 1:1, and
after the first introduction of the silicon-based molded body into the molten silicon, each silicon-based molded body included in the silicon-based molded body kit may be selectively additionally introduced to suppress a decrease in a reaction rate of the induced solid-liquid reaction.

In the method for continuously preparing silicon oxide according to an embodiment of the present disclosure, a temperature of the molten silicon may be 1400 to 1800°C.

Advantageous Effects of Invention

The silicon-based molded body according to the present disclosure includes a first powder particle including silicon; a second powder particle including silicon dioxide; and a third powder particle including one or more metals selected from the group consisting of alkali metal, alkaline earth metal, transition metal, and post-transition metal, wherein average particle diameters (D50) of at least two types of powder particles among the first to third powder particles are different from each other and the silicon-based molded body is formed by press-molding a mixture of the first to third powder particles, and thus, there is an advantage in that the production efficiency of silicon oxide may be improved when inducing a solid-liquid reaction with liquid silicon.

In addition, by continuously preparing silicon oxide through a solid-liquid reaction induced with liquid silicon using the silicon-based molded body described above, not only may the production rate of silicon oxide be significantly improved, but the prepared silicon oxide may be used as an anode material for lithium secondary batteries having excellent discharge capacity characteristics.

Brief Description of Drawings

FIG. 1 is a flowchart of a method for continuously preparing silicon oxide according to an embodiment of the present disclosure.
FIG. 2 is a cross-sectional view of a silicon oxide preparing apparatus 100 according to an embodiment of the present disclosure.
FIG. 3 is a cross-sectional view of a silicon oxide preparing apparatus 100' according to another embodiment of the present disclosure.
FIG. 4 is a photograph of a silicon-based molded body for each porosity.
FIGS. 5(a) and 5(b) are photographs illustrating the different remaining amounts of molten silicon remaining in containers when preparing silicon oxide.

Best Mode for Invention

Hereinafter, a silicon-based molded body of the present disclosure and a method for continuously preparing silicon oxide using the same will be described in detail with reference to the accompanying drawings.

The drawings introduced in the following are provided as an example for sufficiently delivering the concept of the present disclosure to a person skilled in the art. Therefore, the present disclosure is not limited to the drawings but may be modified in many different forms. The drawings presented below may be exaggerated to clarify the spirit of the present disclosure.

Technical terms and scientific terms used in the present specification have the general meaning understood by those skilled in the art to which the present disclosure pertains unless otherwise defined, and a description for the known function and configuration obscuring the present disclosure will be omitted in the following description and the accompanying drawings.

In addition, as used in the specification and the appended claims, the singular forms "a," "an," and "the" are intended to include the plural forms as well, unless the context clearly dictates otherwise.

In addition, a particle diameter described in the specification and the attached patent claims is a value measured based on a particle diameter distribution, which is an indicator of what size (particle diameter) particles are included in a particle group to be measured and in what proportion.

At this time, the particle diameter distribution is measured through a laser diffraction scattering method using scattered light when light is irradiated to particles and refers to a cumulative particle diameter distribution according to volume.

For example, in the cumulative particle diameter distribution, D10 refers to a particle diameter corresponding to 10% of a volume accumulation from a side with a smaller particle diameter, D90 refers to a particle diameter corresponding to 90% of the volume accumulation from the side with the smaller particle diameter, and D50 refers to a particle diameter (hereinafter, referred to as an average particle diameter) corresponding to 50% of the volume accumulation from the side with the smaller particle diameter, where the volume accumulation from the smaller side is 50%.

In this specification and the appended claims, terms, such as first and second are used not in a limiting sense but for the purpose of distinguishing one component from another component.

In this specification and the appended claims, terms, such as include or have mean the presence of features or components described in the specification and may not rule out in advance the possibility of adding one or more other features or components are added, unless specifically limited.

A silicon-based molded body according to an embodiment of the present disclosure includes a first powder particle including silicon; a second powder particle including silicon dioxide; and a third powder particle including one or more metals selected from the group consisting of alkali metal, alkaline earth metal, transition metal, and post-transition metal, wherein average particle diameters (D50) of at least two types of powder particles among the first to third powder particles are different from each other and the silicon-based molded body is formed by press-molding a mixture of the first to third powder particles.

With the increase in demand for secondary batteries, many studies have been conducted to increase the energy density of secondary batteries. In particular, application of silicon oxide-based materials as anode materials included in secondary batteries may solve the volume expansion problem of conventional silicon-based anode materials and may be advantageous for high capacity, and as such, the silicon oxide-based materials have come to prominence as next-generation anode materials.

However, silicon oxide, which is conventionally prepared using a dry process of reacting a small amount of oxygen with metallic silicon or heating and evaporating silicon raw material powder particles, has the disadvantages of low economic feasibility due to high manufacturing costs and low production efficiency due to a long manufacturing time.

In addition, in the case of using silicon oxide as a material for an anode material, when doping metal for the purpose of improving the performance of the anode material, there is a limit to improving a composition uniformity of the doped metal due to a difference in volatilization temperature between silicon oxide and a metal additive.

Meanwhile, the silicon-based molded body according to an embodiment of the present disclosure is formed by press-molding a mixture of the aforementioned first to third powder particles, and since the average particle diameters (D50) of powder particles of at least two of the first powder particle to the second powder particle are different from each other, when the silicon-based molded body is used as a raw material to prepare silicon oxide, the production efficiency of silicon oxide including metal may be significantly improved.

In an embodiment, the silicon-based molded body according to an embodiment of the present disclosure may be used for preparing silicon oxide, and more specifically, for preparing silicon oxide reacting with liquid silicon.

At this time, the silicon-based molded body may refer to a solid molded body formed by press-molding a mixture of the aforementioned first to third powder particles.

Specifically, silicon oxide including a metal may be formed through a solid-liquid reaction induced by liquid silicon and solid silicon-based molded body. At this time, the solid-liquid reaction occurs at an interface between the liquid silicon and the solid silicon-based molded body, so that a reaction contact between the liquid silicon and the solid silicon-based molded body may be maintained stably and continuously, thereby improving the production efficiency of silicon oxide including metal.

In an embodiment, the third powder particle including one or more metals selected from the group consisting of alkali metals, alkaline earth metals, transition metals, and post-transition metals may be a powder particle of a complex oxide including the aforementioned metals and silicon.

As a specific example, the alkali metal may be one or more selected from the group consisting of lithium (Li), sodium (Na), potassium (K), rubidium (Rb), and cesium (Cs), and the alkaline earth metal may be one or more selected from the group consisting of beryllium (Be), magnesium (Mg), and calcium (Ca), the transition metal may be one or more selected from the group consisting of titanium (Ti), zirconium (Zr), vanadium (V), niobium (Nb), chromium (Cr), molybdenum (Mo), manganese (Mn), iron (Fe), cobalt (Co), nickel (Ni), copper (Cu), and zinc (Zn), and the post-transition metal may be one or more selected from the group consisting of aluminum (Al), gallium (Ga), indium (In), tin (Sn), and bismuth (Bi).

In addition, of course, the metal included in the third powder particle may include a lanthanide metal, such as scandium (Sc) or yttrium (Y).

As a more specific example, the third powder particle may be a powder particle of a complex oxide including the metal and silicon, and in this case, the metal included in the third powder particle may be an alkaline earth metal, and thus, the third powder particle may be a powder particle of a complex oxide including an alkaline earth metal and silicon.

As an advantageous example, the third powder particle may be a powder particle of a complex oxide including magnesium and silicon, and the complex oxide may be a complex oxide including one or more magnesium silicates selected from $MgSiO_3$ and $Mg_2SiO_4$.

When the third powder particle is a composite oxide including magnesium silicate, the difference in volatilization temperature with silicon dioxide included in the silicon-based molded body may be significantly reduced compared to the related art, which may be advantageous in improving the composition uniformity of metal doped into silicon oxide unlike the related art.

At this time, the average particle diameter (D50) of the third powder particle may be 5 to 100 um, specifically, 10 to 80 um, and more specifically, 15 to 60 $\mu$m.

As the average particle diameter of the third powder particle satisfies the aforementioned range, there is an advantage in that the formability of the silicon-based molded body may be further improved along with the first and second powder particles, which are described below.

The silicon-based molded body according to an embodiment of the present disclosure may include the first powder particle including silicon and the second powder particle including silicon dioxide in addition to the aforementioned third powder particle. In this case, the average particle diameters (D50) of at least two types of powder particles, among the first to third powder particles, may be different from each other.

The silicon-based molded body refers to that the first to third powder particles are physically bound together and have a shape that may be introduced into molten silicon and does not mean that the molded body is chemically homogeneous partially or particle characteristics of the first to third powder particles are lost as the first to third powder particles are sintered.

In an embodiment, the silicon-based molded body may satisfy Relational expression 1 below:

$$\text{(Relational expression 1)}$$

$$(A_{D50} + B_{D50})/(C_{D90} - C_{D10}) \leq 5$$

In Relational expression 1, $A_{D50}$ is an average particle diameter of powder particle A having a largest average particle diameter among two or more types of powder particles having different average particle diameters, $B_{D50}$ is an average particle diameter of powder particle B having a smallest average particle diameter, $C_{D90}$ is a particle diameter (D90) corresponding to 90% of a volume accumulation from a side with a smaller particle diameter in mixed powder particles C including the powder particle A and the powder particle B, and $C_{D10}$ is a particle diameter (D10) corresponding to 10% of a volume accumulation of the mixed powder particles C.

As an advantageous example, Relational expression 1 may satisfy 5 or less, 4 or less, 3 or less, 2 or less, and may be substantially, 0.1 or more, and more substantially, 0.3 or more.

If Relational expression 1 is less than 0.3, the formability of the silicon-based molded body, which is press-formed, may be improved, but reaction efficiency may decrease when inducing a solid-liquid reaction with liquid silicon, and if Relational expression 1 exceeds 5, the formability of the silicon-based molded body may be lowered, and therefore, it is advantageous for Relational expression 1 to satisfy the aforementioned conditions.

For example, powder particle A having the largest average particle diameter may be a first powder particle including silicon, and powder particle B having the smallest average particle diameter may be a second powder particle including silicon dioxide. Conversely, a case in which the second powder particle including silicon dioxide is powder particle A having the largest average particle diameter and the first powder particle including silicon is powder particle B is not excluded.

In addition, of course, powder particle A may be the third powder particle including the aforementioned metal, and powder particle B may be the first powder particle or the second powder particle.

However, considering the efficiency of the induced solid-liquid reaction with liquid silicon, it may be advantageous that powder particle A is the third powder particle including the aforementioned metal and powder particle B is the second powder particle including silicon dioxide.

As a specific example, the average particle diameter of the first powder particle including silicon may be 5 to 40 um, specifically, 5 to 30 $\mu$m, and more specifically, 8 to 25 $\mu$m.

The average particle diameter of the second powder particle including silicon dioxide may be 0.01 to 25 um, specifically, 0.5 to 15 $\mu$m, and more specifically, 1 to 10 $\mu$m.

In an embodiment, a porosity of the silicon-based molded body defined by a percentage ($T_d$ - $S_d$)/$T_d \times$ 100) for a ratio of a difference($T_d$ - $S_d$) between a true density $T_d$ and a molding density $S_d$ to the true density may be 5 to 69%, specifically, 5 to 65%, more specifically, 10 to 65%, more specifically, 20 to 65%, and more specifically, 35 to 65%.

At this time, the true density is an average value of repeated measurements of 6 or more times using a density meter (AccPyc II1340 from Micromeritics) based on the standard ASTM C 604, and may be 1.5 to 5.0 g/cm$^3$, specifically, 2.0 to 4.0 g/cm$^3$.

In addition, the molding density is an average value of apparent densities measured for 50 arbitrary molded bodies immediately after molding, and may be 0.5 to 4.0 g/cm$^3$, specifically, 0.7 to 3.0 g/cm$^3$.

Here, the apparent density may be a value calculated through the formula $G \div \left\{ (\frac{D}{2})^2 \times \pi \times H \right\}$ after measuring the diameter (D), height (H), and weight (G) of each molded body.

If the porosity of the silicon-based molded body is less than 5%, the strength of the silicon-based molded body may be improved, but physical damage to the silicon-based molded body, such as cracks and breakage, may occur during the manufacturing process, and if the porosity exceeds 69%, the strength may be low and the shape of the silicon-based molded body may not be maintained, and thus, it is advantageous for the porosity of the silicon-based molded body to satisfy the aforementioned range.

In addition, in the silicon-based molded body, a solid-liquid reaction with liquid silicon may be induced during a silicon oxide preparing process, which will be described below, and since the porosity of the silicon-based molded body satisfies the aforementioned range, a production rate of silicon oxide may be improved.

As a specific example, the strength of the silicon-based molded body may be 1 to 10 N/mm$^2$, specifically, 1.5 to 6 N/mm$^2$, and more specifically, 2 to 4 N/mm$^2$.

At this time, the strength may be a compressive strength measured through a compression test using a universal testing machine after preparing each silicon-based molded body according to the specimen standard of ASTM D 3410, which is a strength test standard.

As the strength (compressive strength) of the silicon-based molded body satisfies the aforementioned range, not only may the production rate of silicon oxide prepared through a solid-liquid reaction induced with liquid silicon in the silicon oxide preparing process described below be improved, but also the solid-liquid reaction may be induced stably.

In an embodiment, a molar ratio of silicon to silicon dioxide included in the silicon-based molded body may be 1:0.01 to 10, specifically, 1:0.1 to 8, and more specifically, 1:0.25 to 4.

Specifically, the silicon-based molded body may include a plurality of independent silicon-based molded bodies having different molar ratios of silicon:silicon dioxide within the aforementioned range.

As an example, the silicon-based molded body may include a first silicon-based molded body, a second silicon-based molded body, a third silicon-based molded body, a fourth silicon-based molded body, a fifth silicon-based molded body, a sixth silicon-based molded body, a seventh silicon-based molded body, and an eighth silicon-based molded body having molar ratios of silicon:silicon dioxide as 1:0.25, 1:0.5, 1:1, 1:1.5, 1:2, 1:2.5, 1:4, and 1:6, respectively.

At this time, each of the silicon-based molded bodies described above is only an example, and the present disclosure is not limited by the number of each silicon-based molded body included in the silicon-based molded body and the corresponding molar ratios of silicon: silicon dioxide, and different molar ratios of silicon:silicon dioxide and the corresponding number of each of silicon-based molded bodies may be freely selected within the aforementioned range.

As the silicon-based molded body includes a plurality of independent silicon-based molded bodies having different molar ratios of silicon:silicon dioxide within the aforementioned range, a decrease in the reaction rate of the induced solid-liquid reaction may be suppressed by selectively introducing each silicon-based molded body to induce the solid-liquid reaction with liquid silicon during the process of preparing silicon oxide to be described below.

As described above, the silicon-based molded body according to the present disclosure may be formed by press-molding a mixture of the aforementioned first to third powder particles, and the shape of the silicon-based molded body varies depending on the shape of a mold for press-molding.

As a non-limiting example, the shape of the silicon-based molded body may be cylindrical, prismatic, conical, truncated cone, polygonal pyramid, truncated polygonal pyramid, sphere, hemisphere, tube, pyramid, etc., but the present disclosure is not limited by the shape of the silicon-based molded body.

In another aspect, the present disclosure provides a silicon-based molded body kit for preparing silicon oxide, including two or more silicon-based molded bodies having different molar ratios of silicon:silicon dioxide.

As described above, the two or more silicon-based molded bodies included in the silicon-based molded body kit for preparing silicon oxide are independent and may have different molar ratios of silicon:silicon dioxide.

At this time, the different molar ratios of silicon:silicon dioxide are the same as or similar to those described above, and detailed descriptions are omitted.

In a specific example, the silicon-based molded body kit for preparing silicon oxide may include 2 or more, 3 or more, 4 or more, 5 or more, 6 or more, 7 or more, 8 or more, 9 or more, 10 or more, 11 or more, 12 or more, 13 or more, 14 or more, and 15 or more independent silicon-based molded bodies having different molar ratios of silicon: silicon dioxide, and may include 100 or less, substantially, 50 or less independent silicon-based molded bodies, but an upper limit value thereof is not limited.

In addition, the present disclosure provides a method for manufacturing a silicon-based molded body, capable of manufacturing the silicon-based molded body described above.

The method for manufacturing a silicon-based molded body according to the present disclosure includes a) preparing a mixture of a first powder particle including silicon, a second powder particle including silicon dioxide, and a third powder particle including one or more metals selected from the group consisting of alkali metal, alkaline earth metal, transition metal, and post-transition metal, b) filling a mold with the prepared mixed powder particles; and c) press-molding the mixed powder particles filling the mold.

The first powder particle, second powder particle, and third powder particle included in the mixed powder particles in step a) of preparing the mixed powder particles are the same as or similar to those described above, and detailed descriptions are omitted.

In an embodiment, the mixed powder particles may be prepared by introducing the first powder particle, second powder particle, and third powder particle to a mixer commonly known in the art, such as a pedal mixer, extruder, Banbury mixer, kneader, or mixing roll to be prepared.

At this time, the first powder particle, the second powder particle, and the third powder particle may be mixed in consideration of the components of silicon and silicon dioxide included in the first powder particle, the second powder particle, and the third powder particle so that the molar ratio of silicon and silicon dioxide included in the mixed powder particles satisfies the aforementioned range.

As a specific example, the mixed powder particles may include 1 to 80 parts by weight of the first powder particle, 0.1 to 80 parts by weight of the second powder particle, and 0.1 to 80 parts by weight of the third powder particle, based on 100 parts by weight of the mixed powder particles.

Next, the step of filling the mold with the prepared mixed powder particles is performed.

In a specific example, the filling may be performed by introducing the mixed powder particles into the mold so that a depth filled by the mixed powder particles is 1 to 5 cm, specifically, 1 to 2 cm.

Next, a step of press-molding the mixed powder particles filling the mold is performed.

In an embodiment, the press-molding step includes c-1) a first pressing step for deaeration in the mixed powder particles; and c-2) a second pressing step for controlling porosity.

At this time, the porosity a the porosity of a finally obtained silicon-based molded body and is the same as or similar to that described above, so detailed descriptions are omitted.

In a specific example, the first pressing step may be performed so that a volume change rate is 50 to 70%, specifically, 55 to 65%, based on an initial filling volume of the mixed powder particles filled in step b).

If the volume change rate is less than 50% based on the initial filling volume of the mixed powder particles in the first pressing step, deaeration in the mixed powder particles may not be performed smoothly, and if the volume change rate exceeds 70%, there may be a limitation in controlling the porosity in the second pressing step to be described below, and therefore, the first pressing step may be performed within the aforementioned range.

The second pressing step may be performed so that the volume change rate is 55 to 90%, specifically, 60 to 90%, more specifically, 66 to 90%, and even more specifically 66 to 81%, based on the initial filling volume.

At this time, after performing the second pressing step, the porosity may be lowered as the volume change rate is greater compared to the initial filling volume, and may be increased as the volume change rate is decreased.

However, the aforementioned porosity may be affected not only by the second pressing step but also by the particle diameter distribution of each powder particle included in the mixed powder particles.

As described above, since the step of press-molding the mixed powder particles filling the mold includes the first pressing step for deaeration in the mixed powder particles and the second pressing step for controlling the porosity, a silicon-based molded body satisfying the porosity and strength characteristics described above may be provided.

A method for continuously preparing silicon oxide provided according to another aspect of the present disclosure includes: a) continuously introducing a silicon-based molded body to a molten silicon to induce a solid-liquid reaction;

and b) condensing and precipitating gaseous silicon oxide produced by the solid-liquid reaction, wherein the silicon-based molded body includes: a first powder particle including silicon; a second powder particle including silicon dioxide; and a third powder particle including one or more metals selected from the group consisting of alkali metal, alkaline earth metal, transition metal, and post-transition metal, wherein an average particle diameter (D50) of at least two types of powder particles among the first to third powder particles are different from each other and the silicon-based molded body is formed by press-molding a mixture of the first to third powder particles.

The silicon oxide according to an embodiment of the present disclosure is continuously manufactured through a solid-liquid reaction between the aforementioned silicon-based molded body and liquid silicon, and not only may the production rate of silicon oxide be significantly improved, but also composition uniformity of silicon oxide including the metal included in the third powder particle may be significantly improved.

In addition, there is an advantage that silicon oxide including metal may be continuously prepared in a single process without any additional equipment or follow-up processes.

Hereinafter, the method for continuously preparing silicon oxide according to the present disclosure will be described by steps in detail.

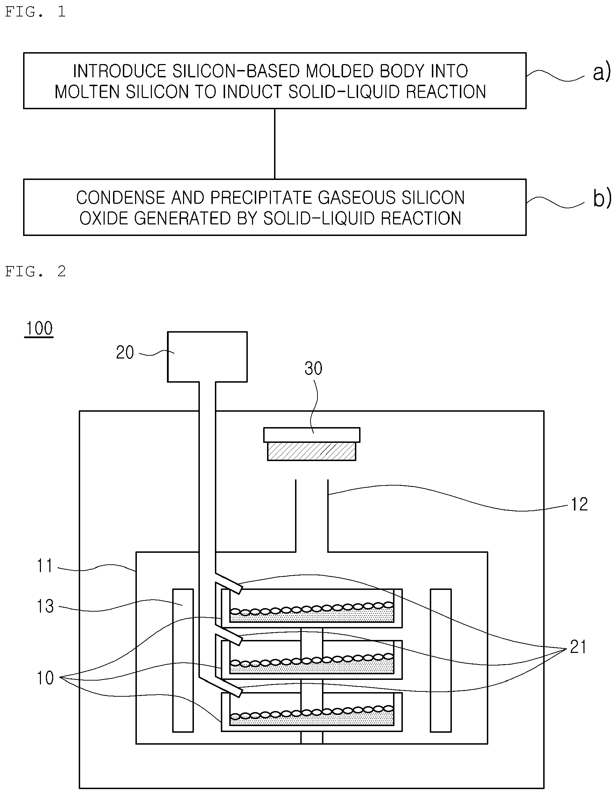

FIG. 1 is a flowchart of a method for continuously preparing silicon oxide according to an embodiment of the present disclosure.

First, a) a step of continuously introducing a silicon-based molded body to a molten silicon to induce a solid-liquid reaction is performed.

Here, the silicon-based molded body includes a first powder particle including silicon; a second powder particle including silicon dioxide; and a third powder particle including one or more metals selected from the group consisting of alkali metal, alkaline earth metal, transition metal, and post-transition metal, wherein average particle diameters (D50) of at least two types of powder particles among the first to third powder particles are different from each other and the silicon-based molded body is formed by press-molding a mixture of the first to third powder particles.

In addition, the first to third powder particles may be the same as or similar to those described above.

In an embodiment, the silicon-based molded body may satisfy Condition 1 below.

Condition 1: Silicon-based molded body satisfying Relational expression 1 below:

$$\text{(Relational expression 1)}$$

$$(A_{D50} + B_{D50})/(C_{D90} - C_{D10}) \leq 5$$

In Relational expression 1, $A_{D50}$ is an average particle diameter of powder particle A having a largest average particle diameter among two or more types of powder particles having different average particle diameters, $B_{D50}$ is an average particle diameter of powder particle B having a smallest average particle diameter, $C_{D90}$ is a particle diameter (D90) corresponding to 90% of a volume accumulation from a side with a smaller particle diameter in mixed powder particles C including the powder particle A and the powder particle B, and $C_{D10}$ is a particle diameter (D10) corresponding to 10% of a volume accumulation of the mixed powder particles C.

If the silicon-based molded body does not satisfy the aforementioned Condition 1, a desired shape of the molded body may not formed or the shape itself may not be maintained when press-molding the mixture of the first to third powder particles, and therefore, it is preferable that the silicon-based molded body satisfies Condition 1 above.

In detail, Relational expression 1 of Condition 1 may satisfy 5 or less, 4 or less, 3 or less, and 2 or less, preferably, 0.3 or more, and more preferably, 0.6 or more.

More specifically, in Relational expression 1, powder particle A having the largest average particle diameter may be the first powder particle including silicon, and powder particle B having the smallest average particle diameter may be the second powder particle including silicon dioxide, Conversely, a case in which the second powder particle including silicon dioxide is powder particle A having the largest average particle diameter and the first powder particle including silicon is powder particle B is not excluded.

In addition, of course, powder particle A may be a third powder particle including the aforementioned metal, and powder particle B may be the first powder particle or the second powder particle.

However, considering the efficiency of the induced solid-liquid reaction with liquid silicon, it may be advantageous for powder particle A to be the third powder particle including the aforementioned metal and powder particle B to be the second powder particle including silicon dioxide.

As a specific example, an average particle diameter of the first powder particle may be 5 to 40 um, specifically 5 to 30 um, more specifically, 8 to 25 $\mu$m, and an average particle diameter of the second powder particle may be 0.01 to 25 um, specifically 0.5 to 15 um, more specifically, 1 to 10 $\mu$m, and an average particle diameter of the third powder particle may be 5 to 100 um, specifically, 10 to 80 um, and more specifically, 15 to 60 $\mu$m.

In an embodiment, the silicon-based molded body may further satisfy one or more of Conditions 2 to 4 below.

Condition 2: the silicon-based molded body has a porosity of 5 to 65% defined by a percentage for a ratio of a difference($T_d$ - $S_d$) between a true density $T_d$ and a molding density $S_d$ to the true density.

Condition 3: the silicon-based molded body has a strength of 1.5 to 6 N/mm$^2$

Condition 4: the silicon-based molded body has 1:0.25 to 4 as a molar ratio of silicon:silicon dioxide.

In detail, a porosity of the silicon-based molded body defined by a percentage ($T_d$ - $S_d$)/$T_d$ $\times$ 100) for a ratio of a difference($T_d$ - $S_d$) between a true density $T_d$ and a molding density $S_d$ to the true density in Condition 2 may be 5 to 69%, specifically, 5 to 65%, more specifically, 10 to 65%, more specifically, 20 to 65%, and more specifically, 35 to 65%.

At this time, the true density is an average value of repeated measurements of 6 or more times using a density meter (AccPyc II1340 from Micromeritics) based on the standard ASTM C 604, and may be 1.5 to 5.0 g/cm$^3$, specifically, 2.0 to 4.0 g/cm$^3$.

In addition, the molding density is an average value of apparent densities measured for 50 arbitrary molded bodies immediately after molding, and may be 0.5 to 4.0 g/cm$^3$, specifically, 0.7 to 3.0 g/cm$^3$.

Here, the apparent density may be a value calculated through the formula $G \div \left\{ (\frac{D}{2})^2 \times \pi \times H \right\}$ after measuring the diameter (D), height (H), and weight (G) of each molded body.

In addition, the strength of Condition 3 may be a compressive strength measured through a compression test using a universal testing machine after preparing each silicon-based molded body according to the specimen standard of ASTM D 3410, which is a strength test standard, and the strength of the silicon-based molded body may be 1 to 10 N/mm$^2$, specifically, 1.5 to 6 N/mm$^2$, and more specifically, 2 to 4 N/mm$^2$.

In addition, in Condition 4, the molar ratio of silicon to silicon dioxide included in the silicon-based molded body may be 1:0.01 to 10, specifically, 1:0.1 to 8, and more specifically, 1:0.25 to 4.

As the silicon-based molded body satisfies any one or more of the aforementioned Condition 2 to Condition 4, the reaction efficiency when inducing a solid-liquid reaction with liquid silicon may be improved, thereby significantly improving the production efficiency of silicon oxide.

As an example, the silicon-based molded body may satisfy one or more of the aforementioned Condition 2 to Condition 4, two or more of the aforementioned Condition 2 to Condition 4, or all of Condition 2 to Condition 4.

In an embodiment, the silicon-based molded body may be a silicon-based molded body kit including two or more silicon-based molded bodies having different molar ratios of silicon:silicon dioxide.

As a specific example, the silicon-based molded body may be a silicon-based molded body kit including a plurality of independent silicon-based molded bodies having different molar ratios of silicon:silicon dioxide within the aforementioned range, and the plurality of independent molded bodies included in the silicon-based molded body kit may include a first silicon-based molded body, a second silicon-based molded body, a third silicon-based molded body, a fourth silicon-based molded body, a fifth silicon-based molded body, a sixth silicon-based molded body, a seventh silicon-based molded body, and an eighth silicon-based molded body having molar ratios of silicon:silicon dioxide as 1:0.25, 1:0.5, 1:1, 1:1.5, 1:2, 1:2.5, 1:4, and 1:6, respectively.

At this time, each of the silicon-based molded bodies described above is only an example, and the present disclosure is not limited by the number of each silicon-based molded body included in the silicon-based molded body and the corresponding molar ratios of silicon: silicon dioxide, and different molar ratios of silicon:silicon dioxide and the corresponding number of each of silicon-based molded bodies may be freely selected within the aforementioned range.

As a non-limiting example, the silicon-based molded body kit may include 2 or more, 3 or more, 4 or more, 5 or more, 6 or more, 7 or more, 8 or more, 9 or more, 10 or more, 11 or more, 12 or more, 13 or more, 14 or more, and 15 or more independent silicon-based molded bodies having different molar ratios of silicon: silicon dioxide, and may include 100 or less, substantially, 50 or less independent silicon-based molded bodies, but an upper limit value thereof is not limited.

In an embodiment, in step a) in which the solid-liquid reaction is induced, each silicon-based molded body included in the silicon-based molded body kit may be independently introduced into the molten silicon, and here, the silicon-based molded body initially introduced into the molten silicon is a silicon-based molded body in which the molar ratio of silicon to silicon dioxide substantially satisfies 1:1, and after the initial introduction, each silicon-based molded body included in the silicon-based molded body kit may be selectively introduced to suppress lowering of the reaction rate of the induced solid-liquid reaction.

At this time, the fact that the initially introduced molar ratio of silicon:silicon dioxide substantially satisfies 1:1 may mean that the molar ratio of silicon:silicon dioxide is 1:0.9 to 1.1, specifically 1:0.95 to 1.05.

Specifically, silicon oxide may be generated through a solid-liquid reaction induced by liquid silicon and solid-phase silicon-based molded body, and at this time, silicon-based molded bodies having different molar ratios are independently introduced into the molten silicon according to exhaustion of raw materials during the solid-liquid reaction. As a result, a decrease in the reaction rate of the solid-liquid reaction may be suppressed.

For example, after a silicon-based molded body having a molar ratio of silicon:silicon dioxide substantially satisfying 1:1 is first introduced into the molten silicon, if more of the molten silicon is consumed as the solid-liquid reaction progresses, a silicon-based molded body in which silicon and silicon dioxide are mixed in a molar ratio of 1:0.25 may be introduced, thereby increasing the ratio of Si and thus preventing a decrease in the reaction rate.

Meanwhile, if more of the silicon-based molded body is consumed as the solid-liquid reaction progresses, a silicon-based molded body in which silicon and silicon dioxide are mixed at a molar ratio of 1:4 may be introduced, thereby increasing the rate of $SiO_2$, and thus, preventing a decrease in reaction rate.

Accordingly, the production efficiency of continuously prepared silicon oxide may be significantly improved.

As a specific example, the shape of the silicon-based molded body formed by press-molding a mixture of the aforementioned first to third powder particles may have various shapes depending on the shape of the mold for press-molding. As a non-limiting example, the shape of the silicon-based molded body may be cylindrical, prismatic, conical, truncated cone, polygonal pyramid, truncated polygonal pyramid, sphere, hemisphere, tube, pyramid, or the like, but the present disclosure is not limited by the shape of the silicon-based molded body.

In an embodiment, the silicon-based molded body in step a) may be calcined at 120 to 900°C.

At this time, the calcined silicon-based molded body may be a silicon-based molded body from which impurities, such as moisture, OH groups, CO, $CO_2$ gas, and other oxidation sources present in the silicon-based molded body were removed.

That is, the calcined silicon-based molded body has been subjected to a calcining process for the purpose of volatilizing and removing impurities present in the silicon-based molded body, and the calcining process may be performed at 100 to 1100°C, specifically, 110 to 1000°C, more specifically, 120 to 900°C, and more specifically, 500 to 900°C.

When performing the calcining process, if a calcination temperature is less than 100°C, volatilization and removal of impurities may occur incompletely, and if the calcination temperature exceeds 1100°C, a specific surface area and/or porosity of the silicon-based molded body may be reduced, causing a problem of lowering the production efficiency of silicon oxide, and therefore, the calcining process is preferably performed within the aforementioned calcination temperature range.

As an advantageous example, the silicon-based molded body may be calcined at 500 to 900°C.

When a silicon-based molded body calcined at the above calcining temperature is used as a raw material to induce a solid-liquid reaction with liquid silicon, not only may the productivity of the prepared silicon oxide be improved, but battery capacity and efficiency of secondary batteries may be improved if the prepared silicon oxide is used as an anode material of the secondary batteries.

In a specific example, an impurity residual rate of the calcined silicon-based molded body may be 20% or less, 15% or less, 10% or less, substantially, 0.5% or more, and more substantially, 1% or more.

Here, the impurity residual rate may refer to a rate of an actual mass reduction amount of the silicon-based molded body calcined in the aforementioned calcination temperature range with respect to a mass reduction amount of the silicon-based molded body calcined at the calcination temperature of 1300°C compared to an initial mass of the silicon-based molded body immediately after molding, that is, the silicon-based molded body before calcination.

In detail, at the calcination temperature of 1300°C, impurities, such as moisture, OH groups, CO, $CO_2$ gas, and other oxidation sources, may be substantially removed, so the mass reduction amount of the silicon-based molded body calcined at the calcination temperature of 1300°C may be maximum. However, there is a trade-off relationship between the impurity residual rate and a decrease in specific surface area and/or porosity of the calcined silicon-based molded body according to the calcination temperature, and thus, it is advantageous for the impurity residual rate to satisfy the aforementioned range in terms of improvement of the productivity of silicon oxide and improvement of battery capacity and efficiency of secondary batteries when the prepared silicon oxide is used as an anode material.

In an embodiment, the temperature of the molten silicon may be 1400 to 1800°C, specifically, 1500 to 1700°C.

If the temperature of the molten silicon is less than 1,400°C, silicon may not melt and molten silicon may not be formed, and if the temperature exceeds 1,800°C, time to reach a target temperature, a temperature increase time being maintained, and cooling time to reach the end of the process may significantly lengthen due to a high insulation effect.

In this manner, a reaction contact between the molten silicon and the silicon-based molded body may be continuously maintained, and silicon oxide may be generated through a solid-liquid reaction induced by the liquid silicon and the solid silicon-based molded body.

Silicon oxide may be generated inside the molten silicon, that is, through a solid-liquid reaction with the silicon-based molded body completely supported within the molten silicon, and even when the silicon-based molded body is located at the interface of the molten silicon, silicon oxide may be generated as liquid silicon penetrates into internal pores of the silicon-based molded by due to capillary action.

For example, when silicon oxide prepared through an induced solid-liquid reaction is used as an anode material for a secondary battery, a metal compound may be additionally introduced into the molten silicon.

At this time, the metal compound may be a compound including a metal included as a doping element in a silicon oxide-based anode material for the purpose of improving the performance of the secondary battery, and any metal compound known in the art may be used without limitation.

Next, a step of condensing and precipitating gaseous silicon oxide produced by the solid-liquid reaction may be performed

In an embodiment, the gaseous silicon oxide produced by the solid-liquid reaction may be precipitated on a separately provided collection plate. In this case, any method known in the art for precipitation of the gaseous silicon oxide may be used without limitation.

As a specific example, gaseous silicon oxide may be condensed and precipitated on the collection plate at 500 to 1200°C, specifically, 550 to 1000°C.

At this time, if the temperature of the collection plate is less than 500°C, the generated silicon oxide may be rapidly cooled and precipitated as nanoparticles having a significantly high specific surface area, and if the temperature of the collection plate exceeds 1,200°C, the generated silicon oxide may experience an additional heat treatment effect on the collection plate and crystal grains may grow excessively, so, when the silicon oxide is used as an anode material of secondary batteries, the charge/discharge capacity maintenance rate may be lowered. Therefore, the temperature of the collection plate may satisfy the aforementioned range.

In an embodiment, silicon oxide prepared according to the aforementioned method for continuously preparing silicon oxide may be used as an anode material for lithium secondary batteries.

The x value of the prepared silicon oxide (SiOx) may be 0.6 to 1.1 as a result of measurement through X-ray photoelectron spectroscopy (XPS) analysis or energy dispersive X-ray spectroscopy (EDXS) of a scanning electron microscope (SEM) device.

If the x value is less than 0.6, volume expansion may become significantly large when silicon oxide is used as an anode material for lithium secondary batteries, and if the x value exceeds 1.1, an initial reversibility efficiency of the lithium secondary battery may be lowered.

When silicon oxide is prepared using a silicon-based molded body including a metal element, silicon oxide including a compound indicated as $M_aSi_bO_c$ or $M_aM'_aSi_bO_c$ may be prepared. M and M' are metals that have a high capacity when combined with silicon oxide and may reduce silicon oxide, and may be metals included in the aforementioned third powder particle and/or metal compounds additionally introduced into the molten silicon.

At this time, a or a+a' may be 1 to 8, b may be 1 to 4, and c may be 3 to 20. If a or a+a' is less than 1, ionic conductivity and electrical conductivity may not be significantly improved, and if a or a+a' is more than 8, crystallization may decrease. If b is less than 1, the capacity of the lithium secondary battery may not increase significantly, and if b is more than 4, ionic conductivity and electrical conductivity may decrease. If c is less than 3, crystallization of $M_aSi_bO_c$ or $M_aM'_aSi_bO_c$ may be degraded, and if c is more than 20, the storage capacity of lithium ions may be reduced.

When silicon oxide prepared according to an embodiment of the present disclosure is applied as an anode material for a lithium secondary battery, the following electrochemical properties may be achieved.

An initial reversibility efficiency, which is the ratio (D/C) of the capacity C for lithium alloying with constant current and constant voltage up to 0.005 V using lithium metal as a counter electrode and the capacity D for lithium dealloying with constant current up to 1.5 V, may be implemented to be 75% or more.

In addition, for a silicon oxide anode material, the capacity of lithium alloying performed with a constant current and constant voltage up to 0.005 V and then lithium dealloying performed with a constant current up to 1.5 V using lithium metal as a counter electrode may be 1,000 to 2,350 mAh/g.

In another aspect, the present disclosure may provide a silicon oxide preparing apparatus capable of continuously preparing the silicon oxide described above.

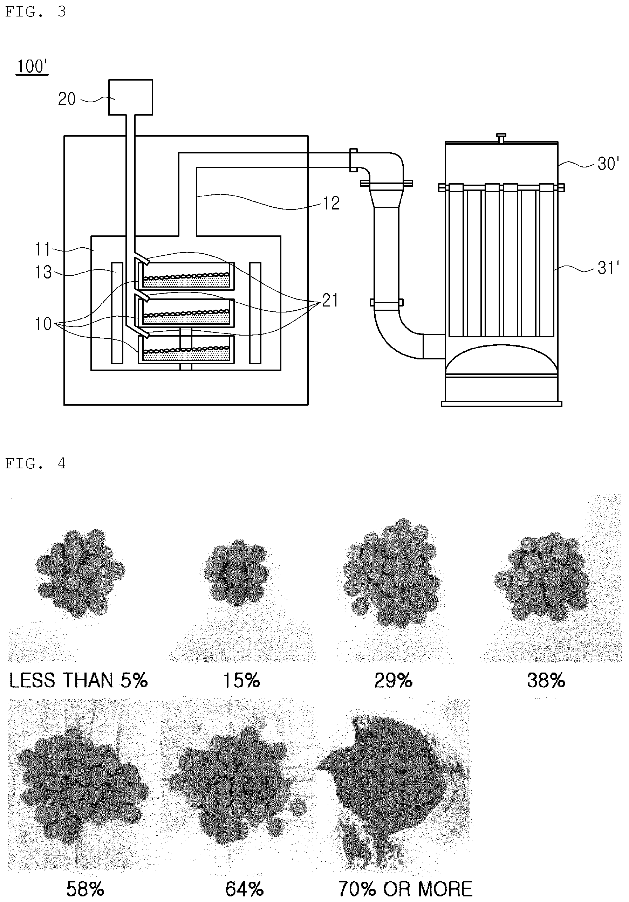

FIGS. 2 and 3 are cross-sectional views of the silicon oxide preparing apparatuses 100 and 100' capable of continuously preparing the silicon oxide described above.

The silicon oxide preparing apparatus 100 and 100' according to the present disclosure may include a container 10, a feeder 20, and collecting units 30 and 30'.

In an embodiment, one or more containers 10 may be provided as a space for accommodating molten silicon and may be stacked in multiple stages and located in a vertical direction. Here, the container 10 may be formed of a material, such as graphite or quartz, and there is no particular limitation on the material, but the container 10 formed of a graphite material may be preferably used.

A reaction unit 11 may be formed on the outside of the container 10. The reaction unit 11 may provide a temporary storage space before collecting the generated silicon oxide in the collecting units 30 and 30', which are described below. In addition, a discharge portion 12 may be formed on one side of the reaction unit 11 to discharge silicon oxide to the collecting units 30 and 30'.

In addition, the container 10 may be heated by a heater 13. At this time, molten silicon may be prepared by setting the temperature of the heater 13 above a melting point of silicon.

In an embodiment, a silicon-based molded body may be supplied to the molten silicon prepared in the container 10 through the feeder 20.

Specifically, the silicon-based molded body may be continuously supplied to the molten silicon on the container 10 through a supply pipe 21 in communication with the feeder 20. One supply pipe 21 may be provided for each container 10 stacked in multiple stages to supply the silicon-based molded body. In other words, by providing a corresponding supply pipe 21 for each container 10, the silicon-based molded body as a raw material may be supplied to each container 10 simultaneously as well as independently.

Hereinafter, the silicon-based molded body and the method for continuously preparing silicon oxide using the same according to the present disclosure are described in more detail through examples. However, the following examples are only a reference for describing the present disclosure in detail, and the present disclosure is not limited thereto and may be implemented in various forms.

In addition, unless otherwise defined, all technical and scientific terms have the same meaning as commonly understood by one of ordinary skill in the art to which this invention pertains. The terminology used in the description herein is merely to effectively describe particular embodiments and is not intended to limit the present disclosure.

(Examples 1 to 7)

A mixture was prepared by mixing silicon (33 wt%), silicon dioxide (7 wt%), and magnesium silicate (60 wt%), a magnesium-based material, as raw materials, homogeneously through a powder particle mixer.

At this time, a mixing molar ratio of silicon:silicon dioxide in the total mixture raw materials including magnesium silicate was 1:1, and the particle diameters (D10, D50, and D90) for each raw material were measured using a laser diffraction particle diameter analyzer (LA-960, HORIBA).

Next, the mixture prepared using each raw material having a different particle diameter distribution was introduced into a mold and then pressed so that a volume change rate was 70% based on the initial filling volume of the mixture, thereby preparing silicon-based molded bodies of Example 1 to Example 7 to have a pellet shape.

At this time, Example 1 to Example 7 are summarized in Table 1 below, in which each raw material has a different particle diameter distribution.

(Experimental Example 1) Evaluation of formability

Formability of each manufactured silicon-based molded body was evaluated, and the results are summarized in Table 1 below.

Here, the formability was evaluated based on the following conditions.

Evaluation of formability: Excellent pellet shape retention rate: o, Average: Δ, Poor: X

In addition, in order to evaluate the effect of the particle diameter distribution characteristics of the raw materials on the formability of the silicon-based molded body, the particle diameter distribution characteristics based on Calculation formula 1 below are summarized in Table 1 below.

(Calculation formula 1)

$$E = (A_{D50} + B_{D50})/(C_{D90} - C_{D10})$$

in Calculation formula 1, $A_{D50}$ is an average particle diameter of powder particle A having a largest average particle diameter among two or more types of powder particles having different average particle diameters, $B_{D50}$ is an average particle diameter of powder particle B having a smallest average particle diameter, $C_{D90}$ is a particle diameter (D90) corresponding to 90% of a volume accumulation from a side with a smaller particle diameter in mixed powder particles C including the powder particle A and the powder particle B, and $C_{D10}$ is a particle diameter (D10) corresponding to 10% of a volume accumulation of the mixed powder particles C.

[Table 1]

| | Silicon | Silicon dioxide | Magnesium silicate | Mixture | | E | Formability |
|---|---|---|---|---|---|---|---|
| | D50 (μm) | D50 (μm) | D50 (μm) | D10 (μm) | D90 (μm) | | |
| Example 1 | 15.2 | 0.02 | 40.1 | 4.12 | 91.2 | 0.46 | ○ |
| Example 2 | 15.2 | 14.8 | 40.1 | 4.43 | 101 | 0.57 | ○ |
| Example 3 | 15.2 | 14.8 | 23.4 | 3.48 | 28.2 | 1.55 | ○ |
| Example 4 | 9.8 | 14.8 | 40.1 | 5.7 | 92.1 | 0.58 | ○ |

(continued)

|  | Silicon | Silicon dioxide | Magnesium silicate | Mixture | | E | Formability |
|---|---|---|---|---|---|---|---|
|  | D50 ($\mu$m) | D50 ($\mu$m) | D50 ($\mu$m) | D10 ($\mu$m) | D90 ($\mu$m) | | |
| Example 5 | 24.3 | 14.8 | 40.1 | 12.9 | 92.3 | 0.69 | ○ |
| Example 6 | 15.2 | 14.8 | 14.6 | 11.7 | 18.8 | 4.20 | Δ |
| Example 7 | 24.3 | 22.8 | 23.4 | 18.1 | 27.3 | 5.12 | X |

Referring to Table 1, it can be seen that when the value E, which is the result of Calculation formula 1, exceeded 5 (Example 7), the formability decreased and it was difficult to manufacture a silicon-based molded body. In addition, in the case of Example 6 in which the particle diameter distribution deviation was small, it was confirmed that some pellet-shaped silicon-based molded bodies were manufactured but a large amount of powder particles were still mixed.

Meanwhile, in the case of Example 1 to Example 5, it was confirmed that the pellet shape substantially free of powder particles was maintained and that the formability was excellent.

As can be seen from Calculation formula 1, as the particle diameter distribution deviation of the mixed powder particles in which the raw material powder particles were mixed increases compared to the sum of the average particle diameters of the raw material powder particles having the largest and smallest average particle diameters, the pores of the silicon-based molded body became dense to have excellent formability.

(Example 8 to Example 12)

Silicon having an average particle diameter (D50) of 12 $\mu$m, silicon dioxide having an average particle diameter (D50) of 4 $\mu$m, and magnesium silicate (40 um), a magnesium-based material, were mixed using a powder particle mixer and filled into a mold to manufacture a silicon-based molded bodies having porosities of 15% (Example 8), 29% (Example 9), 38% (Example 10), 58% (Example 11), and 64% (Example 12), respectively.

Here, the porosity was adjusted by filling the mixture into the mold and then applying first pressing and second pressing. Specifically, in the first pressing step, the mixture was pressed so that the volume change rate was 60% based on the initial filling volume, and the molded body was deaerated along with the first press-molding, and the porosity was controlled through the second pressing performed subsequently. At this time, the porosity was controlled through the second pressing by adjusting the volume change rate to be within the range of 66 to 90% based on the initial filling volume of the mixture.

Thereafter, each silicon-based molded body was continuously introduced into a molten silicon container at 1,600°C in a vacuum chamber using a feeder for 1 hour to induce a solid-liquid reaction.

The product produced through the solid-liquid reaction was condensed on a collection plate at 550°C to produce silicon oxide including magnesium.

(Example 13)

Silicon oxide was prepared in the same manner as in Example 9, except that a mixture ratio of silicon:silica in the total mixture raw material including magnesium silicate was set to 1:4.

(Example 14)

Silicon oxide was prepared in the same manner as in Example 9, except that the mixture ratio of silicon:silica in the total mixture raw material including magnesium silicate was set to 1:0.25.

(Example 15)

Silicon oxide was prepared in the same manner as in Example 8, except that a mixture including nano-silica dispersion, a silicon-based material, instead of magnesium silicate, was filled into a mold and molded to have a porosity of 5% to produce a silicon-based molded body.

(Comparative Example 1)

Silicon oxide was prepared in the same manner as in Example 8, except that the mixture was filled into a mold and molded to have a porosity of 3.5% to produce a silicon-based molded body.

EP 4 403 518 A1

(Comparative Example 2)

Silicon oxide was prepared in the same manner as in Example 8, except that the mixture was filled into a mold and molded to have a porosity of 70% to produce a silicon-based molded body.

(Comparative Example 3)

Silicon oxide was prepared in the same manner as in Example 8, except that silicon-based molded body was added in in the absence of molten silicon.

The characteristics of each silicon-based molded body showing different porosities and the production rate when preparing silicon oxide using the same are summarized in Table 2 below.

[Table 2]

| | Poros ity (%) | Added mater ial | Mixtu re molar ratio of Si:Si $O_2$ | Moldi ng densi ty (g/cm $^3$) | True densi ty (g/cm $^3$) | Stren gth (N/mm$^2$ ) | Wheth er to apply molte n silic on | Product ion rate of silicon oxide (Kg/min ·m$^2$) |
|---|---|---|---|---|---|---|---|---|
| Example 8 | 15 | Mg-based | 1:1 | 1.87 | 2.19 | 7.6 | o | 0.39 |
| Example 9 | 29 | Mg-based | 1:1 | 1.56 | 2.19 | 4.9 | o | 0.86 |
| Example 10 | 38 | Mg-based | 1:1 | 1.35 | 2.19 | 4.1 | o | 1.01 |
| Example 11 | 58 | Mg-based | 1:1 | 0.92 | 2.19 | 2.9 | o | 1.06 |
| Example 12 | 64 | Mg-based | 1:1 | 0.78 | 2.19 | 2.3 | o | 1. 07 |
| Example 13 | 29 | Mg-based | 1:4 | 1.56 | 2.21 | 4.9 | o | 0.23 |
| Example 14 | 29 | Mg-based | 1:0.2 5 | 1.56 | 2.18 | 4.9 | o | 0.21 |
| Example 15 | 5 | Si-based | 1:1 | 2.08 | 2.17 | - | o | 0.15 |
| Comparat ive Example 1 | 3.5 | Mg-based | 1:1 | 1.94 | - | - | o | - |
| Comparat ive Example 2 | 70 | Mg-based | 1:1 | - | - | - | o | - |
| Comparat ive Example 3 | 29 | Mg-based | 1:1 | 1.56 | 2.19 | 4.9 | X | 0.05 |

At this time, true density of the silicon-based molded body was checked using a density meter (AccPyc II1340 from Micromeritics), and the true density measurement principle is as follows. For true density, based on Boyle's law, stating that the pressure and volume of a certain amount of gas included in a certain container are inversely proportional, helium gas is injected into a space in which the sample is present and pressure that changes when the volume of the space is changed is measured. At this time, the true density is measured by calculating the density based on the volume of the sample alone, excluding empty space, such as pores of the molded body by applying ideal gas equation (PV=nRT). The measurement of true density was conducted in compliance with the standard ASTM C 604. At this time, the meas-

15

urement conditions for true density are a gas velocity of 0.1 psi·g/min at room temperature, and for one measurement, a measurement container (cylindrical container having a diameter of 1.8 cm and a height of 4 cm) of the density meter is filled more than half and then measured, and the true density was calculated as an average value of the values measured repeatedly six times or more.

In addition, molding density of the silicon-based molded body is an average value of the apparent density immediately after molding, and the apparent density of the cylindrical molded body was calculated using the formula $G$

$$\div \left\{ \left(\frac{D}{2}\right)^2 \times \pi \times H \right\}$$

after measuring the diameter D, height H, and weight G. At this time, the apparent density was checked by selecting 50 randomly formed silicon-based molded bodies, and the molding density was calculated as an average value of each density.

In addition, the porosity of the silicon-based molded body was calculated by a percentage $(T_d - S_d)/T_d \times 100$ for a ratio of a difference $(T_d - S_d)$ between a true density $T_d$ and a molding density $S_d$ to the true density using the true density, which is a density of only the pure silicon-based molded body excluding empty spaces within the silicon-based molded body, and the molding density, which is the average value of the apparent density including pores in the silicon-based molded body.

In addition, the strength of the silicon-based molded body was measured through a compression test using a universal testing machine (AG-Xplus 100kN from Shimadzu), and a displacement distance and load were measured by applying pressure over time. At this time, the specifications of the strength analysis tester complied with ISO 7500-1, and the specimens were manufactured according to the specimen specifications of ASTM D 3410, the strength test standard for polymer composite materials. The maximum load that the silicon-based molded body could withstand was checked depending on whether there was a crack or breaking sound in the silicon-based molded body or a location of an inflection point in the graph, and the strength was checked by dividing the maximum load by a contact area. The specimens were processed to have a constant rectangular cross-section, and at least five specimens were prepared and tested when analyzed under the same conditions.

A production rate of silicon oxide prepared using each of the silicon-based molded bodies having the aforementioned characteristics as raw materials may be obtained by time taken for the silicon-based molded body to be completely removed after injecting 1 kg of the silicon-based molded body is injected into the molten silicon container in a vacuum chamber using a feeder, and was calculated using Calculation formula 2 below.

```
(Calculation formula 2)

S/(A_L x V)
```

In Calculation formula 2, S is the supply amount of the silicon-based molded body, $A_L$ is the area of the molten silicon, and V is a volatilization time of the silicon-based molded body.

At this time, the area of the container equipped with the molten silicon was equally fixed at 2920 cm$^2$ and the supply amount of the silicon-based molded body was equally fixed at 1 kg, and the production rate was calculated by measuring the volatilization time. The standard for completely vaporizing and removing the molding raw materials was checked with the naked eyes, and there may be a measurement error of ±5%.

Referring to Table 2, it was confirmed that in the case of Example 8 to Example 15, the production rate value satisfied more than 0.1 kg/min·m$^2$, while in the case of Comparative Example 3, although the silicon-based molded body having the same specifications as those of Example 9 was used, since the silicon-based molded body reacts with solid silicon rather than molten silicon, a solid-solid phase reaction occurs and silicon oxide was produced at a low rate of 0.05 kg/min·m$^2$.

In particular, it was observed that the production rate of silicon oxide was the best in Examples 11 and 12, and it can be seen that the characteristics, such as porosity and strength of the silicon-based molded body, induced by the solid-liquid reaction with liquid silicon make an influence.

FIG. 4 is a diagram illustrating optical images of silicon-based molded bodies according to porosity. Referring to FIG. 4, it can be seen that, when a silicon-based molded body is manufactured by molding a silicon-based mixture to have a porosity of 5% to 65%, the silicon-based molded body is not broken and the properties are maintained and used for manufacturing silicon oxide.

It can be seen that, when the silicon-based mixture of Comparative Example 1 is molded to have a porosity less than 5% (3.5%), the molded body is broken, and when the silicon-based mixture of Comparative Example 2 is molded to have a porosity of 70% or more, the shape of a molded body is not maintained, making it impossible to measure specifications, a molded body is not manufactured, and since the mixture is in a powder particle form, scattering of raw materials may occur, and thus, it cannot be used for preparing silicon oxide.

In addition, comparing Example 9 and Comparative Example 3, in the case of preparing silicon oxide by making the characteristics of the silicon-based molded bodies the same, it can be seen that, when the silicon-based molded bodies are introduced into the molten silicon, the production rate of silicon oxide is faster through the solid-liquid reaction, compared to a reaction of silicon-based molded body with solid silicon.

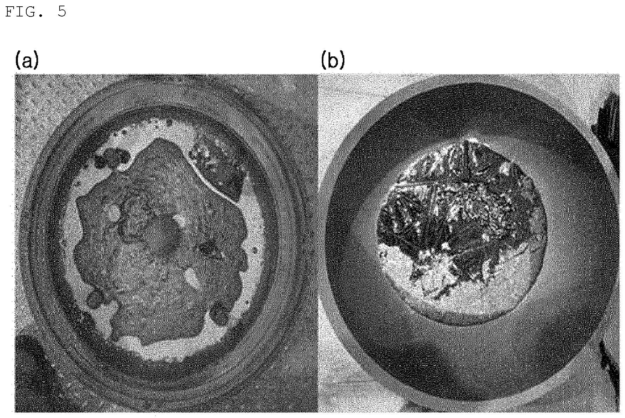

FIGS. 5(a) and 5(b) are photographs illustrating different remaining amounts of molten silicon remaining in the containers when preparing silicon oxide. FIG. 5(a) is a photograph illustrating that a small amount of molten silicon was consumed, and FIG. 5(b) is a photograph illustrating that much of the molten silicon was consumed.

Referring to FIG. 5(a), since less molten silicon was consumed, silicon oxide may be continuously produced using Example 13 in which a mixture molar ratio of $Si:SiO_2$ with a higher molar ratio of silica is 1:4, and the silicon oxide production rate at this time was 0.23 kg/min·m2.

Referring to FIG. 5(b), since much of the molten silicon was consumed, silicon oxide may be continuously produced using Example 14 in which a mixture molar ratio of $Si:SiO_2$ with a higher molar ratio of silicon is 1:0.25, and the silicon oxide production rate at this time was 0.21 kg/min-m2.

In addition, the silicon-based molded body of Example 9 was subjected to a calcining process at each temperature, and then silicon oxide was manufactured, and the initial efficiency results of secondary batteries when the impurity residual rate, specific surface area, production rate of silicon oxide, Si/O atomic ratio, and the anode material are applied are summarized in Table 3 below.

At this time, the impurity residual rate is calculated as a rate of an actual mass reduction amount of the silicon-based molded body calcined at each calcination temperature range based on a mass reduction amount of the silicon-based molded body calcined at a calcination temperature of 1300°C compared to the initial mass of the silicon-based molded body before calcining, and the specific surface area was checked using a specific surface area measurement device (TriStar II3020, Micromeritics).

[Table 3]

|  | Calcination temperature (°C) | Impurity residual rate (%) | Specific surface area (m$^2$/g) | Production rate of silicon oxide (Kg/min ·m$^2$ ) | Si/O atom ratio | Initial efficiency of secondary battery |
|---|---|---|---|---|---|---|
| Example 9 | X | 23 | 347 | 0.79 | 0.28 | 66 |
| Example 9-1 | 120 | 17 | 331 | 0.88 | 0.62 | 74 |
| Example 9-2 | 550 | 6 | 320 | 0.95 | 0.71 | 78 |
| Example 9-3 | 850 | 3 | 318 | 1.01 | 0.74 | 81 |
| Example 9-4 | 1100 | 1 | 205 | 0.84 | 0.80 | 78 |
| Example 9-5 | 1200 | 0.2 | 11 | 0.33 | 0.82 | 76 |

Referring to Table 3, it can be seen that, when preparing silicon oxide through a solid-liquid reaction induced with liquid silicon using the silicon-based molded body on which the calcining process was performed as a raw material, impurities in the silicon-based molded body were effectively removed, thereby increasing the production rate of silicon oxide and improving the initial efficiency of the secondary battery when the prepared silicon oxide is used as an anode material of the secondary battery.

However, it was confirmed that, when the calcination temperature is 1100°C or higher, the silicon oxide production rate changes from an increasing trend to a downward trend due to a decrease in specific surface area. In particular, when the calcination temperature is 1200°C or higher, sintering, not calcination, occurs, the specific surface area rapidly decreases, a volatilization rate of the raw material also decreased, so the silicon oxide production rate rapidly decreased.

Hereinabove, although the present disclosure is described by specific matters, exemplary embodiments, and drawings, they are provided only for assisting in the entire understanding of the present disclosure. Therefore, the present disclosure is not limited to the exemplary embodiments. Various modifications and changes may be made by those skilled in the art to which the present disclosure pertains from this description.

Therefore, the spirit of the present disclosure should not be limited to the aforementioned embodiments, and the following claims as well as all modified equally or equivalently to the claims are intended to fall within the scope and spirit of the disclosure.

**Claims**

1. A silicon-based molded body comprising:

   a first powder particle including silicon;
   a second powder particle including silicon dioxide; and
   a third powder particle including one or more metals selected from the group consisting of alkali metal, alkaline earth metal, transition metal, and post-transition metal,
   wherein average particle diameters (D50) of at least two types of powder particles among the first to third powder particles are different from each other and the silicon-based molded body is formed by press-molding a mixture of the first to third powder particles.

2. The silicon-based molded body of claim 1, wherein the silicon-based molded body satisfies the Relational expression 1 below.

$$(\text{Relational expression 1})$$

$$(A_{D50} + B_{D50})/(C_{D90} - C_{D10}) \leq 5$$

   where $A_{D50}$ is an average particle diameter of powder particle A having a largest average particle diameter among two or more types of powder particles having different average particle diameters,
   $B_{D50}$ is an average particle diameter of powder particle B having a smallest average particle diameter,
   $C_{D90}$ is a particle diameter (D90) corresponding to 90% of a volume accumulation from a side with a smaller particle diameter in mixed powder particles C including the powder particle A and the powder particle B, and
   $C_{D10}$ is a particle diameter (D10) corresponding to 10% of a volume accumulation of the mixed powder particles C.

3. The silicon-based molded body of claim 1, wherein a porosity of the silicon-based molded body defined by a percentage for a ratio of a difference $(T_d - S_d)$ between a true density $T_d$ and a molding density $S_d$ to the true density is 5 to 65%.

4. The silicon-based molded body of claim 1, wherein a molar ratio of silicon : silicon dioxide included in the silicon-based molded body is 1:0.25 to 4.

5. The silicon-based molded body of claim 1, wherein the third powder particle is a powder particle of a complex oxide including the metal and silicon.

6. The silicon-based molded body of claim 1, wherein a strength of the silicon-based molded body is 1.5 to 6 N/mm$^2$.

7. The silicon-based molded body of claim 1, wherein the silicon-based molded body is for preparing silicon oxide.

8. The silicon-based molded body of claim 7, wherein the silicon-based molded body is for preparing silicon oxide that reacts with liquid silicon.

9. A silicon-based molded body kit for preparing silicon oxide, the silicon-based molded body kit comprising:
   two or more silicon-based molded bodies according to any one of claims 1 to 8 having different molar ratios of silicon: silicon dioxide.

10. A method for continuously preparing silicon oxide, the method comprising:

    a) continuously introducing a silicon-based molded body to a molten silicon to induce a solid-liquid reaction; and
    b) condensing and precipitating a gaseous silicon oxide produced by the solid-liquid reaction,
    wherein the silicon-based molded body includes:

a first powder particle including silicon;
a second powder particle including silicon dioxide; and
a third powder particle including one or more metals selected from the group consisting of alkali metal, alkaline earth metal, transition metal, and post-transition metal,
wherein average particle diameters (D50) of at least two types of powder particles among the first to third powder particles are different from each other and the silicon-based molded body is formed by press-molding a mixture of the first to third powder particles.

11. The method of claim 10, wherein
the silicon-based molded body satisfies Condition 1 below:
Condition 1: a silicon-based molded boy satisfying Relational expression 1 below:

$$(Relational\ expression\ 1)$$

$$(A_{D50} + B_{D50})/(C_{D90} - C_{D10}) \leq 5$$

where $A_{D50}$ is an average particle diameter of powder particle A having a largest average particle diameter among two or more types of powder particles having different average particle diameters,
$B_{D50}$ is an average particle diameter of powder particle B having a smallest average particle diameter,
$C_{D90}$ is a particle diameter (D90) corresponding to 90% of a volume accumulation from a side with a smaller particle diameter in mixed powder particles C including the powder particle A and the powder particle B, and
$C_{D10}$ is a particle diameter (D10) corresponding to 10% of a volume accumulation of the mixed powder particles C).

12. The method of claim 11, wherein
the silicon-based molded body further satisfies one or more of conditions 2 to 4 below:

Condition 2: the silicon-based molded body has a porosity of 5 to 65% defined by a percentage for a ratio of a difference($T_d - S_d$) between a true density $T_d$ and a molding density $S_d$ to the true density.
Condition 3: the silicon-based molded body has a strength of 1.5 to 6 N/mm$^2$
Condition 4: the silicon-based molded body has 1:0.25 to 4 as a molar ratio of silicon:silicon dioxide.

13. The method of claim 10, wherein the silicon-based molded body in step a) is calcined at 120 to 900°C.

14. The method of claim 13, wherein an impurity residual rate of the calcined silicon-based molded body is 20% or less.

15. The method of claim 12, wherein the silicon-based molded body is a silicon-based molded body kit including two or more silicon-based molded bodies having different molar ratios of silicon:silicon dioxide.

16. The method of claim 15, wherein

each silicon-based molded body included in the silicon-based molded body kit in step a) is independently introduced into the molten silicon, the silicon-based molded body first introduced into the molten silicon has a molar ratio of silicon:silicon dioxide substantially satisfying 1:1, and
after the first introduction of the silicon-based molded body into the molten silicon, each silicon-based molded body included in the silicon-based molded body kit is selectively additionally introduced to suppress a decrease in a reaction rate of the induced solid-liquid reaction.

17. The method of claim 10, wherein a temperature of the molten silicon is 1400 to 1800°C.

FIG. 1

| INTRODUCE SILICON-BASED MOLDED BODY INTO MOLTEN SILICON TO INDUCT SOLID-LIQUID REACTION | a) |

| CONDENSE AND PRECIPITATE GASEOUS SILICON OXIDE GENERATED BY SOLID-LIQUID REACTION | b) |

FIG. 2

FIG. 3

FIG. 4

LESS THAN 5%    15%    29%    38%

58%    64%    70% OR MORE

FIG. 5

(a)                                          (b)

## INTERNATIONAL SEARCH REPORT

| | |
|---|---|
| International application No. | |
| | **PCT/KR2022/013794** |

**A. CLASSIFICATION OF SUBJECT MATTER**

**C01B 33/113**(2006.01)i

According to International Patent Classification (IPC) or to both national classification and IPC

**B. FIELDS SEARCHED**

Minimum documentation searched (classification system followed by classification symbols)

C01B 33/113(2006.01); B01J 19/26(2006.01); C01B 33/027(2006.01); C04B 35/14(2006.01); H01M 10/052(2010.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 규소 (silicon), 규소 산화물 (silicon oxide), 금속 (metal)

**C. DOCUMENTS CONSIDERED TO BE RELEVANT**

| Category* | Citation of document, with indication, where appropriate, of the relevant passages | Relevant to claim No. |
|---|---|---|
| | KR 10-2014-0118870 A (DAE JOO ELECTRONIC MATERIALS CO., LTD.) 08 October 2014 (2014-10-08) | |
| X | See claims 1 and 3; and paragraphs [0012]-[0013], [0022]-[0023] and [0034]. | 1,3-9 |
| Y | | 10,13-14,17 |
| A | | 2,11-12,15-16 |
| Y | KR 10-2299178 B1 (TERA TECHNOS CO., LTD.) 07 September 2021 (2021-09-07) See claim 8. | 10,13-14,17 |
| A | KR 10-2019-0065182 A (DAE JOO ELECTRONIC MATERIALS CO., LTD.) 11 June 2019 (2019-06-11) See paragraphs [0079] and [0119]. | 1-17 |
| A | KR 10-1318185 B1 (KOREA INSTITUTE OF ENERGY RESEARCH) 15 October 2013 (2013-10-15) See entire document. | 1-17 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 December 2022** | **26 December 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/013794**

**C.      DOCUMENTS CONSIDERED TO BE RELEVANT**

| Category* | Citation of document, with indication, where appropriate, of the relevant passages | Relevant to claim No. |
|---|---|---|
| A | JP 2003-192327 A (SHIN ETSU CHEM. CO., LTD.) 09 July 2003 (2003-07-09)<br>    See entire document. | 1-17 |

Form PCT/ISA/210 (second sheet) (July 2022)

INTERNATIONAL SEARCH REPORT
Information on patent family members

International application No.

**PCT/KR2022/013794**

| Patent document cited in search report | | | Publication date (day/month/year) | Patent family member(s) | | | Publication date (day/month/year) |
|---|---|---|---|---|---|---|---|
| KR | 10-2014-0118870 | A | 08 October 2014 | None | | | |
| KR | 10-2299178 | B1 | 07 September 2021 | EP | 3922601 | A1 | 15 December 2021 |
| | | | | US | 2021-0135222 | A1 | 06 May 2021 |
| | | | | US | 2022-0085372 | A9 | 17 March 2022 |
| | | | | US | 2022-0259052 | A1 | 18 August 2022 |
| | | | | WO | 2021-210739 | A1 | 21 October 2021 |
| KR | 10-2019-0065182 | A | 11 June 2019 | CN | 111418095 | A | 14 July 2020 |
| | | | | EP | 3719881 | A1 | 07 October 2020 |
| | | | | JP | 2021-504918 | A | 15 February 2021 |
| | | | | US | 2021-0184204 | A1 | 17 June 2021 |
| | | | | WO | 2019-108050 | A1 | 06 June 2019 |
| KR | 10-1318185 | B1 | 15 October 2013 | US | 2016-0002055 | A1 | 07 January 2016 |
| | | | | US | 9975782 | B2 | 22 May 2018 |
| | | | | WO | 2014-126272 | A1 | 21 August 2014 |
| JP | 2003-192327 | A | 09 July 2003 | JP | 3852579 | B2 | 29 November 2006 |

Form PCT/ISA/210 (patent family annex) (July 2022)